# EUROPÄISCHE PATENTSCHRIFT

(11) **EP 2 250 421 B1**
(45) Veröffentlichungstag und Bekanntmachung des Hinweises auf die Patenterteilung: **04.05.2016**
(21) Anmeldenummer: 09717625.9
(22) Anmeldetag: 05.03.2009
(51) Int. Cl.: F16L 33/22, F16L 13/14, B25B 27/10, F16L 41/02

(54) **VERBINDUNGSSTÜCK FÜR EINEN KLEMMVERBINDER**
CONNECTING PIECE FOR A CLAMPING CONNECTOR
PIÈCE DE LIAISON D'UN RACCORD À PINCE

(30) Priorität: 07.03.2008 DE 202008003352 U
(43) Veröffentlichungstag der Anmeldung: 17.11.2010
(73) Patentinhaber: Rehau AG + Co, 95111 Rehau (DE)
(72) Erfinder: BONHAG, Ehrenfried, 91126 Schwabach (DE); HAUNSTETTER, Karl-Heinz, 90768 Fürth (DE)
(86) Internationale Anmeldenummer: PCT/EP2009/001558
(87) Internationale Veröffentlichungsnummer: WO 2009/109386

(56) Entgegenhaltungen:
- EP-A- 0 762 034
- DE-A1- 3 836 124
- DE-B3-102004 034 686
- GB-A- 2 127 509
- US-A1- 2007 200 340

## Beschreibung

Die Erfindung betrifft ein metallisches Verbindungsstück für einen Klemmverbinder für Rohre und/oder Schläuche aus polymerem Werkstoff mit mindestens zwei Rohr-/Schlauchanschlusselementen, wobei mindestens ein Anschlusselement einen mit Umfangsrippen versehenen Steckbereich zum Aufschieben jeweils eines Rohr- und/oder Schlauchendes aufweist, an den sich jeweils ein Flanschansatz anschließt, wobei mehrere, insbesondere acht, zahnartige Erhöhungen über den Umfang verteilt angeordnet sind und zwischen den einzelnen zahnartigen Erhöhungen Spaltöffnungen angeordnet sind.

Ein derartiges metallisches Verbindungsstück ist aus der US 2007/0200340 A1 bekannt. In dem aus der US 2007/0200340 A1 bekannten metallischen Verbindungsstück sind die zahnartigen Erhöhungen auf dem Flanschansatz angeordnet. Dadurch kann es unter der Krafteinwirkung bei der Herstellung der Klemmverbindung zu einer Rissbildung im Übergangsbereich der zahnartigen Erhöhung und dem Flanschansatz kommen.

In der DE 3836124 C3 ist ein weiterer zweiteiliger metallischer Klemmverbinder für Rohre und Schläuche aus polymerem Werkstoff mit einem als Rohrhülse ausgebildeten Verbindungsstück beschrieben. Das Rohrverbindungsstück weist einen in das Rohrende einzusetzenden, mit Umfangsrippen versehenen Steckbereich auf. Weiterhin ist der Steckbereich in axialer Richtung durch einen Flanschansatz begrenzt, der dem aufzuschiebenden Rohr als Anschlag dient.

Diese metallischen Verbindungsstücke eignen sich, um eine flüssigkeitsdichte und unlösbare Verbindung für Kunststoffrohre und -schläuche herzustellen, aber ihr hohes Gewicht und die hohen Kosten erweisen sich als nachteilig.

Es hat sich gezeigt, dass bei der Verwendung eines metallischen Verbindungsstücks weitere Materialeinsparungen hinter dem Flanschbereich möglich sind. Dies hat zur Folge, dass beim Herstellen der Verbindung der Flanschansatz so stark beansprucht wird, dass es zu Rissbildungen in diesem Bereich kommen kann. Dies kann auch zu Undichtigkeiten der Verbindung führen.

Hier setzt die Erfindung ein, die es sich zur Aufgabe gemacht hat, den Materialeinsatz für ein metallisches Verbindungsstück weiter zu reduzieren und eine Beschädigung des Flanschansatzes bei der Herstellung der Verbindung zu vermeiden. Gleichzeitig soll die äußere Form des Verbindungsstücks nur unwesentlich von der bekannter metallischer Verbindungsstücke abweichen.

Erfindungsgemäß wird diese Aufgabe durch ein metallisches Verbindungsstück mit den Merkmalen des Anspruches 1 und durch einen Klemmverbinder mit den Merkmalen des Anspruches 7 gelöst.

Bei der Erfindung sind die Nachteile des Standes der Technik dadurch vermieden, dass auf der den Umfangsrippen gegenüberliegenden Seite des Flanschansatzes mindestens eine zahnartige Erhöhung angeordnet ist und zwischen dem Flanschansatz und den zahnartigen Erhöhungen ein Freiraum angeordnet ist.

Für die Herstellung einer Klemmverbindung bestehend aus einem erfindungsgemäßen metallischen Verbindungsstück, einem Rohr-/Schlauch und einem über dem Steckbereich des Verbindungsstücks und das Rohr-/Schlauchende schiebbaren Hülse wird ein Werkzeug verwendet, dass aus zwei parallel zueinander angeordneten beweglichen Werkzeugbacken besteht. Dabei wird eine der Werkzeugbacken hinter dem Flanschansatz des metallischen Verbindungsstücks und eine an der auf das Rohr/den Schlauch aufgeschobenen Hülse angesetzt. Durch Zusammenfahren der beiden Werkzeugbacken wird die Hülse über den Steckbereich des metallischen Verbindungsstückes mit dem darauf aufgesteckten Rohr-/Schlauchende geschoben, so dass eine fluiddichte Verbindung entsteht.

Durch die Anordnung mindestens einer zahnartigen Erhöhung auf der den Umfangsrippen gegenüberliegenden Seite des Flanschansatzes ist es möglich eine Auflage für den einen Werkzeugbacken zum Herstellen der Klemmverbindung zu schaffen, wobei der Auflagedurchmesser dem Durchmesser des anzuschließenden Rohres und/oder Schlauches entspricht. Ein derartiges Verbindungsstück lässt sich auch durch spanabhebende Herstellungsverfahren, wie Drehen, und durch Umformverfahren, wie Fließpressen, leicht herstellen.

Es hat sich gezeigt, dass durch diese Durchmesseranpassung es gewährleistet ist, dass weitgehend nur eine axiale Verschiebung der Hülse stattfindet und der Flanschansatz sehr gleichmäßig belastet wird.

Erfindungsgemäß ist zwischen dem Flanschansatz und der mindestens einen zahnartigen Erhöhung ein Freiraum angeordnet. Somit kann erreicht werden, dass der Flanschansatz sich unter der Krafteinwirkung bei der Herstellung der Klemmverbindung elastisch verformen kann und es zu keiner Rissbildung im Übergangsbereich der zahnartigen Erhöhung und dem Flanschansatz kommt.

Erfindungsgemäß sind mehrere, insbesondere acht, zahnartige Erhöhungen über den Umfang verteilt angeordnet sind und zwischen den einzelnen zahnartigen Erhöhungen Spaltöffnungen sind angeordnet. Somit ist keine umlaufende Ausbildung der Erhöhung notwendig. Damit ist der Materialeinsatz auf eine einfache und kostengünstige Art weiter reduziert. In diesem Zusammenhang hat sich gezeigt, dass es besonders günstig ist 4 bis 16 zahnartige Erhöhungen über den Umfang zu verteilen.

Es hat sich auch als günstig erwiesen die zahnartigen Erhöhungen gleichmäßig über dem Umfang zu verteilen. Diese Anordnung ermöglicht es, dass bei einer beliebigen Zugänglichkeit der Verbindungsstelle und damit des metallischen Verbindungsstücks bei der Herstellung der Klemmverbindung ein sicheres Aufliegen und Positionieren der Werkzeugbacke gegeben ist.

In einer weiteren vorteilhaften Ausgestaltung weisen die zahnartigen Erhöhungen Zusatzfunktionen auf. Es hat sich gezeigt, dass vor allem bei kleinen Abmessungen der Rohre/Schläuche die Anbringung der durch Normen geforderten Datumsuhren zum Erkennen des Herstellungszeitpunktes des Verbindungsstückes auf dem Umfang keinen Platz zwischen den zahnartigen Erhöhungen haben. Um diese dennoch normgerecht zu platzieren, wurde erkannt, dass diese selbst als zahnartige Erhöhung ausgebildet werden können. Weiterhin können auf den zahnartigen Erhöhungen auch andere Informationen integriert werden.

Von Vorteil kann es sein, dass die Kontur der zahnartigen Erhöhungen auf der dem Flanschansatz abgewandten Seite schräg zur jeweiligen Steckbereichsachse bis auf einen Durchmesser in der Größe des Steckbereichs hin abfällt. Durch diese schräge Gestaltung ist es gerade bei Verbindungsstücken, deren Anschlusselemente nicht eine gemeinsame Achse aufweisen, möglich den Werkzeugbacken sicher zu positionieren, da durch die Schräge eine Art Führung entsteht, die den Werkzeugbacken auf die Erhöhungen gleiten lässt.

Gemäß einer bevorzugten Ausführungsform der Erfindung sind mindestens zwei Anschlusselemente in einem Winkel von kleiner als 180° zueinander angeordnet. Es entstehen so Verbindungsstücke, die Bögen, insbesondere rechtwinkligen Umlenkungen, oder Abzweigen, insbesondere T-Stücken, entsprechen. Es kann dabei vorteilhaft sein, dass mindestens eine von mehreren zahnartigen Erhöhungen bei derartigen Verbindungsstücken flächenmäßig kleiner ausgebildet ist als die anderen. Diese verkleinerte zahnartige Erhöhung ist vorzugsweise im Bereich zwischen zwei Anschlusselementen angeordnet. Es ist dadurch möglich die Flanschansätze näher aneinander zu rücken und somit den Bauraum zu verkleinern. Da die zahnartige Erhöhung im Bereich zwischen zwei Anschlusselemente dann aber in den Krümmungsbereich des Verbindungsstückes reichen würde, wurde erkannt, dass eine Verkleinerung der dort angeordneten zahnartigen Erhöhung vorteilhaft ist. Somit kommt es nicht zu einer Spannungsspitze in diesem Bereich und gleichzeitig kann der Werkzeugbacken sicher positioniert werden. Die Verkleinerung der zahnartigen Erhöhung lässt sich in diesem Bereich zwischen den Anschlusselementen besonders durch eine steil abfallende Kontur auf der dem Flanschansatz abgewandten Seite erreichen. Die Erfindung betrifft weiterhin einen Klemmverbinder für Rohre/Schläuche aus polymerem Werkstoff mit einem erfindungsgemäßen metallischen Verbindungsstück und einer axial zur Rohr-/Schlauchachse beweglichen Schiebehülse.

Der Klemmverbinder zeichnet sich dadurch aus, dass der Außendurchmesser des Rohres/Schlauches ohne den eingesetzten Steckbereich annähernd genauso groß ist wie ein Kopfkreisdurchmesser der mindestens einen zahnartigen Erhöhung. Durch diese geometrische Gestaltung ist es möglich, dass der zur Herstellung der Klemmverbindung eingesetzte Werkzeugbacken parallel zum Flanschansatz ausgerichtet ist und somit eine gleichmäßige Krafteinleitung erfolgt. Es ist somit vorteilhaft möglich eine fluiddichte Klemmverbindung herzustellen, ohne dass es zu einer Rissbildung im Bereich des Flanschansatzes kommt. Die Erfindung soll nun an nicht einschränkenden Ausführungsbeispielen näher beschrieben werden. Es zeigt:
- Figur 1 -: Metallisches Verbindungsstück mit einer zahnartigen Erhöhung
- Figur 2a -: Erfindungsgemäßes metallisches Verbindungsstück mit mehreren zahnartigen Erhöhungen in der Ansicht
- Figur 2b -: Schnitt durch das erfindungsgemäße metallisches Verbindungsstück aus Figur 2a entlang der Linie A-A
- Figur 2c -: Dreidimensionale Ansicht des metallisches Verbindungsstücks aus Figur 2a
- Figur 3a -: Erfindungsgemäßes metallisches Verbindungsstück mit einer zahnartigen Erhöhung mit Zusatzfunktion
- Figur 3b -: Schnitt durch das erfindungsgemäße metallisches Verbindungsstück aus Figur 3a entlang der Linie B-B
- Figur 4 -: Schematische Ansicht des Herstellen eines erfindungsgemäßen Klemmverbinders mit Werkzeug

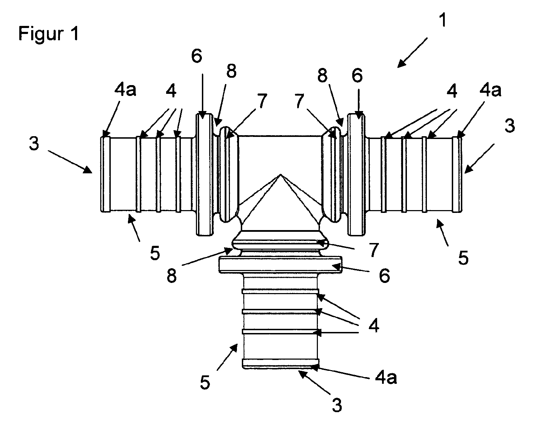

In Figur 1 ist ein metallisches Verbindungsstück (1) dargestellt. Dieses Verbindungsstück (1) ist als T-Stück ausgebildet und besitzt drei Anschlusselemente (3), wobei alle drei Anschlusselemente (3) als Steckbereich (5) ausgebildet sind. In diesem Ausführungsbeispiel weisen die Steckbereiche (5) jeweils vier Umfangsrippen (4, 4a) auf, die nicht gleichmäßig über die Länge des Steckbereichs (5) verteilt sind. Es ist aber auch möglich eine andere Anzahl und eine andere Verteilung der Umfangsrippen (4, 4a) vorzusehen.

An die Steckbereiche (5) schließt sich jeweils ein Flanschansatz (6) an. Dieser ist im Durchmesser größer ausgebildet als der Steckbereich (5) und die Umfangsrippen (4, 4a), so dass ein auf die Steckbereiche (5) aufgeschobenes Rohr oder ein aufgeschobener Schlauch (2) mit seiner Stirnfläche bis an den Flanschansatz (6) herangeschoben werden kann. Dadurch ist es möglich einfach zu überprüfen, ob der Steckbereich (5) richtig in das Rohr/den Schlauch (2) eingefügt ist.

Auf der den Steckbereichen (5) abgewandten Seite der Flanschansätze (6) ist jeweils eine über den gesamten Umfang verlaufende zahnartige Erhöhung (7) angeordnet. Zwischen den Flanschansätzen (6) und der zahnartigen Erhöhung (7) ist ein Freiraum (8) dargestellt, der die zahnartigen Erhöhungen (7) von den Flanschansätzen (6) trennt. Durch diese Gestaltung kann sich der Flanschansatz (6) bei der Herstellung der Klemmverbindung durch ein Werkzeug (13) elastisch verformen und es kommt nicht zu einem Spannungsriss an der Verbindungsstelle zwischen Flanschansatz (6) und zahnartiger Erhöhung (7).
Die zahnartigen Erhöhungen (7) sind in diesem Ausführungsbeispiel auf der dem zugehörigen Flanschansatz (6) abgewandten Seite abgeschrägt. Es wird damit erreicht, dass der Werkzeugbacken (14) bei der Herstellung der Klemmverbindung, der hinter dem Flanschansatz (6) angeordnet ist, durch die abgeschrägte Gestaltung auf die zahnartige Erhöhung (7) aufgleitet und somit eine optimale Positionierung der Werkzeugbacke (14) erfolgt.

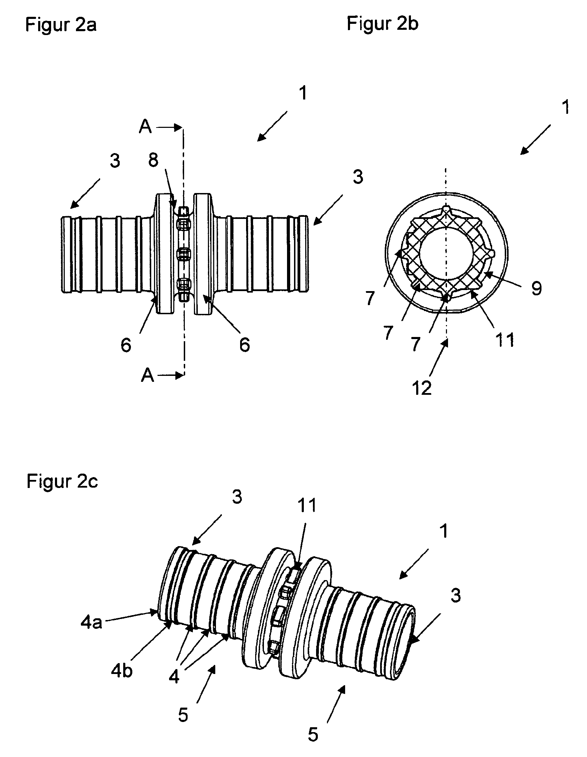

In den Figuren 2a, 2b und 2c ist eine erste Ausführungsform eines erfindungsgemäßen Verbindungsstücks (1) dargestellt. Dieses gerade metallische Verbindungsstück (1) weist zwei Anschlusselemente (3) auf. Auch in diesem Ausführungsbeispiel sind beide Anschlusselemente (3) als Steckbereiche (5) ausgebildet. Es liegt aber auch im Rahmen der Erfindung, dass ein Anschlusselement als Gewindeanschluss ausgebildet ist, so dass auf dieser Seite eine Verschraubung mit einem weiteren Bauteil erfolgen kann.
Beide Steckbereiche (5) weisen fünf Umfangsrippen (4, 4a, 4b) auf, wobei die am weitesten vom Flanschansatz (6) entfernte Umfangsrippe (4a) breiter als alle anderen Umfangsrippen (4, 4b) ausgebildet ist. Bis auf die Umfangsrippe (4b), die der am weitesten vom Flanschansatz (6) entfernten Umfangsrippe (4a) benachbart ist, sind in diesem Ausführungsbeispiel alle Umfangsrippen (4, 4a) als Ringe ausgebildet. Diese Umfangsrippe (4b) ist auf der Seite, die in Richtung Flanschansatz (6) zeigt mit einem größeren Durchmesser ausgebildet als auf der anderen Seite, so dass sich eine Art Sägezahn ergibt. Durch diese Gestaltung ist eine gute Verankerung des Rohres/Schlauches (2) nach dem Aufschieben und dem Anbringen der Schiebehülse (10) möglich.

Da beide Anschlusselemente (3) als Steckbereich (5) ausgeführt sind, sind auch zwei Flanschansätze (6) notwendig, um den einen Werkzeugbacken (14, 14a) als Gegenlager festzulegen. Um die Baulänge zu verkürzen, ist zwischen den beiden Flanschansätzen (6) nur eine zahnartige Erhöhung (7) notwendig, da diese bei der Herstellung beider Klemmverbindungen als Auflage für eine Werkzeugbacke (14a) dienen kann.

Auch in diesem Beispiel ist zwischen den Flanschansätzen (6) und der zahnartigen Erhöhung (7) ein Freiraum (8) vorgesehen.

Die zahnartige Erhöhung (7) selbst ist derart ausgebildet, dass sie aus mehreren einzelnen über den Umfang des Verbindungsstücks (1) angeordneten zahnartigen Erhöhungen (7) besteht. Wie in Figur 2b zu erkennen, sind die zahnartigen Erhöhungen (7) gleichmäßig über den Umfang verteilt. Zwischen den einzelnen zahnartigen Erhöhungen (7) ist jeweils eine Spaltöffnung (9) angeordnet, die als Trennung der einzelnen zahnartigen Erhöhungen (7) dient.

In den vorhandenen Spaltöffnungen (9) können Kennzeichnungen zur Angabe des Werkstoffs, aus dem das Verbindungsstück (1) besteht, Angaben über das Herstellungsdatum durch Anordnung von sogenannten Datumsuhren oder dergleichen angeordnet werden.

Da dieses metallische Verbindungsstück (1) meist mittels Gießen hergestellt wird, ist eine Teilungsebene (12) notwendig, die eine Entformung des Verbindungsstücks (1) ermöglicht. Um die Gießwerkzeuggeometrie nicht unnötig kompliziert gestalten zu müssen, dürfen ausgehend von der Teilungsebene (12) keine Hinterschneidungen vorliegen. Dies kann insbesondere bei den einzelnen zahnartigen Erhöhungen (7) eintreten. Eine Lösungsmöglichkeit stellt das Vorsehen von Entformungsschrägen (11) dar.

Durch die Anordnung von acht zahnartigen Erhöhungen (7) über dem Umfang des Verbindungsstücks (1) ist gewährleistet, dass der Werkzeugbacken (14, 14a) bei beliebiger Einbaulage sicher aufliegt und gleichzeitig kann das sonst zwischen den Flanschansätzen (6) notwendige Material reduziert werden. Durch diese Materialreduktion ist es auch möglich annähernd gleichmäßige Wandstärken über das Verbindungsstück (1) zu erhalten, was sich positiv auf die Spannungsverteilung nach dem Herstellen durch Gießen auswirkt.

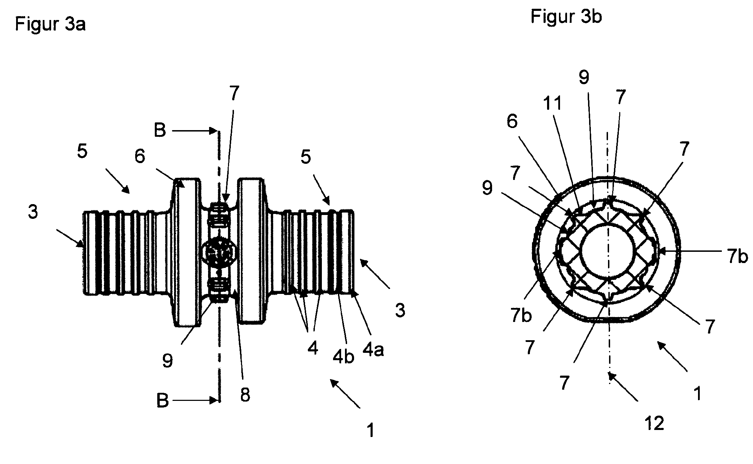

In der Figur 3a und 3b ist ein weiteres metallisches Verbindungsstück (1) dargestellt. Um Wiederholungen zu vermeiden, wird lediglich auf die Unterschiede zur ersten Ausführungsform eingegangen. Bei diesem Verbindungsstück (1) ist der Durchmesser des Verbindungsstücks (1) kleiner als in den Figuren 2a, 2b, 2c, so dass die Länge des Umfanges nicht ausreicht um in den Spaltöffnungen (9) zwischen den zahnartigen Erhöhungen (7) alle Kennzeichnungen, insbesondere die Datumsuhren unterzubringen.
Aus diesem Grund wurde erfindungsgemäß erkannt, dass auch die zahnartigen Erhöhungen (7) mit Zusatzfunktionen ausgestattet werden können. In dem Ausführungsbeispiel der
Figuren 3a und 3b sind zwei zahnartige Erhöhungen (7b) mit Zusatzfunktionen versehen. Diese sind als Datumsuhren ausgebildet, so dass die Kennzeichnung des Herstellungsdatums des Verbindungsstücks (1) angebracht werden kann. Der Durchmesser, bis auf den die Datumsuhren überstehen, entspricht dem der anderen zahnartigen Erhöhungen (7), so dass der Werkzeugbacken (14) auch auf den Datumsuhren sicher positionierbar ist.

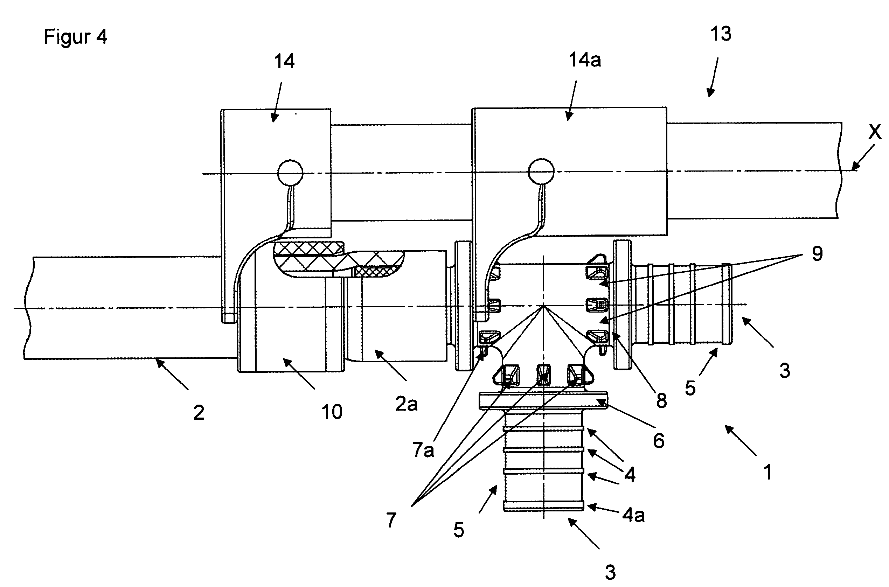

In der Figur 4 ist schematisch das Herstellen einer Klemmverbindung mit einem erfindungsgemäßen metallischen Verbindungsstück (1), eines Rohres/Schlauches (2), einer Schiebehülse (10) mittels eines Werkzeugs (13) dargestellt. Um Wiederholungen zu vermeiden, wird lediglich auf die Unterschiede zu den vorgenannten Ausführungsbeispielen eingegangen.
Das in dieser Figur 4 dargestellte Werkzeug (13) ist dabei nur als Ausschnitt der beiden parallel zueinander angeordneten Werkzeugbacken (14, 14a) gezeichnet. Bei der Herstellung der Klemmverbindung ist ein Werkzeugbacken (14) fest und der andere Werkzeugbacken (14a) entlang einer Achse (X) beweglich am Werkzeug (13) angeordnet. Die Werkzeugbacken (14, 14a) sind gabelförmig ausgebildet, so dass ein Aufstecken auf das Rohr/den Schlauch (2) und das Verbindungsstück (1) möglich ist.
Um die Klemmverbindung herzustellen ist zuerst die Schiebehülse (10) auf den Endbereich des Rohres/Schlauches aufzustecken. Danach wird das Rohr-/Schlauchende (2a) so aufgeweitet, dass der Innendurchmesser des Rohr-/Schlauchendes (2a) größer ist als der Außendurchmesser des Steckbereichs (5) des Verbindungsstücks (1). Nur so kann das Rohr-/Schlauchende (2a) über den Steckbereich (5) geführt werden. Um eine sichere Verbindung herzustellen, ist das Rohr-/Schlauchende (2a) dabei möglichst weit an den Flanschansatz (6) aufzuschieben.

Im Anschluss daran werden die Werkzeugbacken (14, 14a) positioniert und die Schiebehülse (10) durch Verringerung des Abstandes beider Werkzeugbacken (14, 14a) über das Rohr-/Schlauchende (2a) mit dem im Inneren angeordneten Steckbereich (5) bis zum Flanschansatz (6) aufgeschoben. Somit ist die Herstellung der Klemmverbindung abgeschlossen.

Bei der Verringerung des Abstandes zwischen den beiden Werkzeugbacken (14, 14a) werden hohe Kräfte benötigt. Diese bewirken zum einen die Bewegung der Schiebehülse (10) und zum anderen müssen sie um ein Kräftegleichgewicht einzustellen über den Flanschansatz (6) aufgenommen werden. Um keine Beschädigung, insbesondere am Übergang des Flanschansatzes (6) zum Grundkörper des Verbindungsstücks (1) ist eine möglichst gleichmäßige Krafteinleitung notwendig. Dies ist nur über ein nahezu planes Anliegen des Werkzeugbackens (14, 14a) an dem Flanschansatz (6) möglich. Da die beiden Werkzeugbacken (14, 14a) parallel zueinander angeordnet sind, wurde erkannt, dass der Außendurchmesser vom nicht aufgeweiteten Rohr/Schlauch (2) und der Auflageflächedurchmesser des Werkzeuges (13) am Verbindungsstück (1) nahezu identisch sein sollten. Damit ergibt sich aber eine größere Wandstärke zwischen zwei Flanschansätzen (6), was sich negativ auf die Spannungssituation beim Gießen auswirkt und einen unnötigen Materialeinsatz bedeutet.

Um dieses Problem zu lösen, sind nach dem Flanschansatz (6) zahnartige Erhöhungen (7), die durch einen Freiraum (8) von dem Flanschansatz (6) getrennt sind, angeordnet. Bei diesem in Figur 4 dargestellten Verbindungsstück (1) kann der Abstand der beiden sich gegenüberliegenden Anschlusselemente (3) noch dadurch verkürzt werden, dass in jenem Bereich zwischen diesen sich gegenüberliegenden Anschlusselementen (3), in dem das dritte Anschlusselement (3) angeordnet ist, vorzugsweise beidseitig eine flächenmäßig kleinere zahnartige Erhöhung (7a) angeordnet ist. Es wurde erkannt, dass in diesem Bereich die zahnartige Erhöhung (7a) kleiner ausgebildet sein muss, damit keine Spannungsspitze im Bereich des Übergangs auftritt und somit eine sichere Funktion gewährleistet werden kann.

## Patentansprüche

1. Metallisches Verbindungsstück (1) für einen Klemmverbinder für Rohre und/oder Schläuche (2) aus polymerem Werkstoff mit mindestens zwei als Steckbereich (5) ausgebildeten Rohr-/Schlauchanschlusselementen (3), wobei mindestens ein Anschlusselement (3) einen mit Umfangsrippen (4, 4a, 4b) versehenen Steckbereich (5) zum Aufschieben jeweils eines Rohr- und/oder Schlauchendes (2a) aufweist, wobei an die Steckbereiche (5) sich jeweils ein Flanschansatz (6) anschließt, wobei mehrere, insbesondere acht, zahnartige Erhöhungen (7) über den Umfang verteilt angeordnet sind und zwischen den einzelnen zahnartigen Erhöhungen (7) Spaltöffnungen (9) angeordnet sind, **dadurch gekennzeichnet, dass** mindestens eine zahnartige Erhöhung (7) auf der den Umfangsrippen (4, 4a, 4b) gegenüberliegenden Seite des Flanschansatzes (6) angeordnet ist und zwischen dem Flanschansatz (6) und den zahnartigen Erhöhungen (7) ein Freiraum (8) angeordnet ist.

2. Metallisches Verbindungsstück (1) nach Anspruch 1, **dadurch gekennzeichnet, dass** die zahnartigen Erhöhungen (7) im gleichen Abstand über den Umfang verteilt angeordnet sind.

3. Metallisches Verbindungsstück (1) nach zumindest einem der vorhergehenden Ansprüche, **dadurch gekennzeichnet, dass** die zahnartige Erhöhung (7a) mit Zusatzfunktionen, insbesondere als Datumsuhr, ausgebildet ist.

4. Metallisches Verbindungsstück (1) nach zumindest einem der vorhergehenden Ansprüche, **dadurch gekennzeichnet, dass** die Kontur der zahnartigen Erhöhungen (7) auf der dem Flanschansatz (6) abgewandten Seite schräg zur jeweiligen Steckbereichsachse (X) bis auf einen Durchmesser in der Größe des Steckbereichs (5) hin abfällt.

5. Metallisches Verbindungsstück (1) nach zumindest einem der vorhergehenden Ansprüche, **dadurch gekennzeichnet, dass** mindestens zwei Anschlusselemente (3) mit einem Winkel kleiner 180° zueinander angeordnet sind.

6. Metallisches Verbindungsstück (1) nach Anspruch 5, **dadurch gekennzeichnet, dass** mehrere zahnartige Erhöhungen (7) vorgesehen sind und mindestens eine flächenmäßig kleiner ausgebildet ist als die mindestens eine andere zahnartige Erhöhung (7).

7. Klemmverbinder für Rohre und/oder Schläuche (2) aus polymerem Werkstoff mit einem metallischen Verbindungsstück (1) nach einem der vorherigen Ansprüche, mit einem Rohr/Schlauch (2), mit einer axial zur Rohr-/Schlauchachse beweglichen Schiebehülse (10), die unter Herstellung einer Klemmverbindung über das Rohr-/Schlauchende (2a) mit dem in das Rohr-/Schlauchende (2a) eingesetzten Steckbereich (3) des Verbindungsstücks (1) überschiebbar ist, **dadurch gekennzeichnet, dass** der Außendurchmesser des Rohres/Schlauches (2) ohne den eingesetzten Steckbereich (3) annähernd genauso groß ist wie ein Kopfkreisdurchmesser der mindestens einen zahnartigen Erhöhung (7).

## Claims

1. Metallic connecting piece (1) for a clamping connector for pipes and/or hoses (2) made of polymeric material, having at least two pipe/hose connection elements (3) formed as a plug-in region (5), wherein at least one connection element (3) has a plug-in region (5), provided with circumferential ribs (4, 4a, 4b), for pushing on in each case one pipe and/or hose end (2a), the plug-in regions (5) being adjoined by in each case a flange attachment (6), wherein a plurality of, in particular 8, tooth-like elevations (7) are arranged in a manner distributed around the circumference and gap openings (9) are arranged between the individual tooth-like elevations (7), **characterized in that** on that side of the flange attachment (6) that is opposite the circumferential ribs (4, 4a, 4b) there is arranged at least one tooth-like elevation (7) and a free space (8) is arranged between the flange attachment (6) and the tooth-like elevations (7).

2. Metallic connecting piece (1) according to Claim 1, **characterized in that** the tooth-like elevations (7) are arranged in a manner distributed equidistantly around the circumference.

3. Metallic connecting piece (1) according to at least one of the preceding claims, **characterized in that** the tooth-like elevation (7a) is formed with additional functions, in particular as a date insert.

4. Metallic connecting piece (1) according to at least one of the preceding claims, **characterized in that** the contour of the tooth-like elevations (7) on the side remote from the flange attachment (6) drops obliquely towards the respective plug-in region axis (X) down to a diameter at the size of the plug-in region (5).

5. Metallic connecting piece (1) according to at least one of the preceding claims, **characterized in that** at least two connection elements (3) are arranged at an angle of less than 180° with respect to one another.

6. Metallic connecting piece (1) according to Claim 5, **characterized in that** a plurality of tooth-like elevations (7) are provided and at least one is formed with a smaller area than the at least one other tooth-like elevation (7).

7. Clamping connector for pipes and/or hoses (2) made of polymeric material, having a metallic connecting piece (1) according to one of the preceding claims, having a pipe/hose (2), having a sliding sleeve (10) that is movable axially with respect to the pipe/hose axis, it being possible to slide said sliding sleeve (10) over the pipe/hose end (2a) with the plug-in region (3) of the connecting piece (1) inserted into the pipe/hose end (2a), producing a clamping connection, **characterized in that** the outside diameter of the pipe/hose (2) without the inserted plug-in region (3) is approximately the same size as a tip circle diameter of the at least one tooth-like elevation (7).

## Revendications

1. Raccord en métal (1) pour un raccord de serrage de tubes et/ou de flexibles (2) en matériau polymère, comprenant au moins deux éléments de raccord de tubes/flexibles (3) réalisés sous forme de région d'enfichage (5), au moins un élément de raccord (3) présentant une région d'enfichage (5) pourvue de nervures périphériques (4, 4a, 4b) destinées à enfiler à chaque fois une extrémité de tube et/ou de flexible (2a), auxquelles régions d'enfichage (5) se raccorde à chaque fois un élément de bride (6), plusieurs rehaussements (7), en particulier huit rehaussements en forme de dents étant répartis sur la périphérie et des ouvertures de fente (9) étant disposées entre les rehaussements (7) en forme de dents individuels, **caractérisé en ce qu'**au moins un rehaussement (7) en forme de dent est disposé du côté de l'élément de bride (6) opposé aux nervures périphériques (4, 4a, 4b) et **en ce qu'**entre l'élément de bride (6) et les rehaussements (7) en forme de dents est prévu un espace libre (8).

2. Raccord en métal (1) selon la revendication 1, **caractérisé en ce que** les rehaussements (7) en forme de dents sont répartis uniformément sur la périphérie.

3. Raccord en métal (1) selon au moins l'une quelconque des revendications précédentes, **caractérisé en ce que** le rehaussement en forme de dent (7a) est réalisé avec des fonctions supplémentaires, notamment un indicateur de date.

4. Raccord en métal (1) selon au moins l'une quelconque des revendications précédentes, **caractérisé en ce que** le contour des rehaussements (7) en forme de dents sur le côté opposé à l'élément de bride (6) diminue obliquement vers l'axe de la région d'enfichage respectif (X) jusqu'à un diamètre ayant la taille de la région d'enfichage (5).

5. Raccord en métal (1) selon au moins l'une quelconque des revendications précédentes, **caractérisé en ce qu'**au moins deux éléments de raccord (3) sont disposés l'un par rapport à l'autre suivant un angle inférieur à 180°.

6. Raccord en métal (1) selon la revendication 5, **caractérisé en ce que** plusieurs rehaussements (7) en forme de dents sont prévus, et au moins l'un est réalisé avec une plus petite surface que l'au moins un autre rehaussement (7) en forme de dent.

7. Raccord de serrage pour tubes et/ou flexibles (2) en matériau polymère comprenant un raccord en métal (1) selon l'une quelconque des revendications précédentes, comprenant un tube/flexible (2), comprenant un manchon coulissant (10) déplaçable axialement par rapport à l'axe du tube/flexible, qui peut être glissé en produisant un raccord de serrage par-dessus l'extrémité du tube/flexible (2a) avec la région d'enfichage (3) du raccord (1) insérée dans l'extrémité du tube/flexible (2a), **caractérisé en ce que** le diamètre extérieur du tube/flexible (2), sans la région d'enfichage (3) insérée, est approximativement aussi grand qu'un diamètre circulaire de la tête de l'au moins un rehaussement (7) par engagement par correspondance géométrique de dent.
